# EUROPÄISCHE PATENTSCHRIFT

(11) **EP 0 546 415 B1**
(45) Veröffentlichungstag und Bekanntmachung des Hinweises auf die Patenterteilung: **15.11.1995**
(21) Anmeldenummer: 92120431.9
(22) Anmeldetag: 30.11.1992
(51) Int. Cl.: C08J 11/24, C08L 75/00

(54) **Verfahren zur Herstellung von Hydroxylgruppen aufweisenden Verbindungen aus Polyurethanharnstoff- oder Polyharnstoffabfällen und ihre Verwendung**
Process for producing hydroxy group containing compounds from polyurethane or polyurea waste and their use
Procédé de préparation de composés ayant des groupes hydroxyle à partir de déchets de polyuréthane ou de polyureé et leur utilisation

(30) Priorität: 12.12.1991 DE 4140967
(43) Veröffentlichungstag der Anmeldung: 16.06.1993
(73) Patentinhaber: BAYER AG, 51368 Leverkusen (DE)
(72) Erfinder: Münzmay, Thomas, Dr., W-4047 Dormagen (DE); Rasshofer, Werner, Dr., W-5000 Köln 80 (DE); Dörner, Karl-Heinz, Dipl.-Ing., W-5024 Pulheim (DE); Liman, Ulrich, Dr., W-4019 Monheim 2 (DE)

(56) Entgegenhaltungen:
- EP-A- 0 007 978
- DD-A- 226 576
- DE-A- 4 024 601
- US-A- 3 632 530

## Beschreibung

Die Erfindung betrifft ein neues Verfahren zur Herstellung von Hydroxylgruppen aufweisenden Verbindungen aus Polyurethanharnstoff- oder Polyharnstoffabfällen durch alkoholytische Zersetzung dieser Kunststoffe und anschließender destillativer Aufarbeitung der Alkoholyseprodukte und die Verwendung der erhaltenen, Hydroxylgruppen aufweisenden Verbindungen als Ausgangsmaterialien bei der Herstellung von Polyurethankunststoffen.

Es ist bereits bekannt, nach dem Polyisocyanat-Polyadditionsverfahren hergestellte Kunststoffe, insbesondere Schaumstoffe, durch geeignete Reaktivlösungsmittel in niedermolekulare Bestandteile zu zerlegen und in eine lösliche Form zu überführen. Eine dieser Methoden ist die sog. Alkoholyse und hier insbesondere die sog. Glykolyse, wobei mehrwertige Alkohole, insbesondere Glykole, zur Spaltung der Polyisocyanat-Polyadditionsprodukte und Auflösung der Spaltprodukte eingesetzt werden. Einschlägige Vorveröffentlichungen sind beispielsweise DE 1 110 405, DE 2 238 109, DE 2 304 444, DE 2 414 091, DE 2 516 863, DE 2 557 172, DE 2 738 572, DE 2 759 054, DE 2 902 509, DE 3 702 495, US 3 109 824, US 3 404 103, US 3 632 530, US 3 983 087, US 3 738 946, US 3 632 530, US 3 300 417, US 2 937 151, US 4 014 809, US 4 110 266, US 4 159 972, US 4 162 995, EP 11 661, EP 105 167.

Die EP-A-11 661 lehrt eine Variante dieses Prinzips zur Zersetzung von weichen Polyurethanschaumstoffen, derzufolge dem Reaktionsgemisch nach erfolgter Glykolyse eine höhermolekulare, nicht destillierbare Polyhydroxylverbindung einverleibt wird, worauf sich eine destillative Entfernung zumindest eines Teils des noch vorliegenden Glykols anschließt.

Keiner dieser Vorveröffentlichungen läßt jedoch eine Lösung des Problems der alkoholytischen Zersetzung von Polyurethanharnstoff- oder Polyharnstoffabfällen unter Wiedergewinnung von brauchbaren Alkoholyseprodukten, insbesondere des Problems der Aufarbeitung von solchen Kunststoffen, erkennen, die unter Verwendung von Polyisocyanatgemischen der Diphenylmethanreihe und aromatischen Diaminen als Kettenverlängerungsmittel hergestellt worden waren.

Erst die DE-PS 4 024 601 befaßt sich mit diesem Problem, wobei speziell nach dem RIM-Verfahren hergestellte Polyisocyanat-Polyadditionsprodukte als Ausgangsmaterialien in Betracht gezogen werden. Gemäß dieser Vorveröffentlichung erfolgt die Umsetzung mit niedermolekularen mehrwertigen Alkoholen unter Einhaltung eines Kunststoff/Alkohol-Gewichtsverhältnisses von mindestens 3:1 unter anschließender Abmischung der Alkoholyseprodukte mit sog. Primärpolyolen zu stabilen Dispersionen hoher Viskosität.

Die hohe Viskosität der Verfahrensprodukte der DE-PS 4 024 601 ist ein Nachteil, der eine aus Gründen der möglichst vollständigen Kunststoff-Wiederverwertung wünschenswerten Verwendung der Alkoholyse-Produkte in anteilig hohen Mengen bei der erneuten Verarbeitung nach dem Polyisocyanat-Polyadditionsverfahren erschwert. Versuche, die Viskosität des Endprodukts durch höhere Reaktionstemperaturen und/oder längere Reaktionszeiten bei der Alkoholyse zu senken, führten zu einem unerwünscht hohen Gehalt an, vor allem den eingebauten Diisocyanaten entsprechenden Diaminen im Reaktionsprodukt.

Es war daher die der Erfindung zugrunde liegende Aufgabe, ein neues Verfahren zur Herstellung von Hydroxylgruppen aufweisenden Verbindungen aus Polyurethanharnstoffen oder Polyharnstoffen durch alkoholytischen Abbau dieser Kunststoffe zur Verfügung zu stellen, welches zu Verfahrensprodukten einer vergleichsweise deutlich erniedrigten Viskosität und einem geringen Gehalt an freien Diaminen führt.

Diese Aufgabe konnte mit der Bereitstellung des nachstehend näher beschriebenen erfindungsgemäßen Verfahrens gelöst werden.

Gegenstand der Erfindung ist ein Verfahren zur Herstellung von alkoholische Hydroxylgruppen aufweisenden, als Ausgangsmaterial für das Isocyanat-Polyadditionsverfahren geeigneten Verbindungen durch Alkoholyse von Polyisocyanat-Polyadditionsprodukten bei erhöhten Temperaturen unter anschließender destillativer Aufarbeitung des Alkoholyseprodukts, dadurch gekennzeichnet, daß man
A) Polyurethanharnstoff- oder Polyharnstoffabfälle, in denen das Molverhältnis von Harnstoffgruppen zu Urethangruppen bei 1:20 bis 1:0 liegt, in zerkleinerter Form in Abmischung mit
B) mehrwertigen Alkoholen des Molekulargewichtsbereichs 62 bis 250 unter Einhaltung eines Gewichtsverhältnisses (A):(B) von 3:1 bis 1:10 auf 120 bis 250°C unter Bildung eines homogenen flüssigen Reaktionsgemisches erhitzt, und anschließend unter vermindertem Druck mindestens 10 % des eingesetzten mehrwertigen Alkohols (B) destillativ entfernt, so daß der Destillationsrückstand ohne Berücksichtigung der gegebenenfalls zugesetzten Komponente (C) einen Restgehalt von freiem mehrwertigem Alkohol (B) von maximal 50 Gew.-% aufweist, wobei dem Gemisch gegebenenfalls vor und/oder nach der destillativen Entfernung des überschüssigen Alkohols (B)
C) insgesamt bis zu 1 000 Gew.-%, bezogen auf das Gewicht der Ausgangskomponente (A), mindestens einer, unter den Destillationsbedingungen nicht flüchtigen Polyhydroxylverbindung eines über 250 liegenden Molekulargewichts zugemischt werden.

Gegenstand der Erfindung ist auch die Verwendung der nach diesem Verfahren erhaltenen, Hydroxylgruppen aufweisenden Verbindungen als Ausgangsmaterial bei der Herstellung von Polyurethankunststoffen nach dem Isocyanat-Polyadditionsverfahren.

Das erfindungsgemäße Verfahren besitzt gegenüber dem Verfahren des Standes der Technik insbesondere folgende Vorteile:
1. Die Alkoholyse der Polyuretharnstoff und/oder Polyharnstoff-Kunststoff-Abfälle kann bei relativ niedrigen Temperaturen durchgeführt werden.
2. Trotz dieser erniedrigten Reaktionstemperaturen sind kurze Reaktionszeiten möglich.
3. Die benötigten Mengen an niedermolekularen, mehrwertigen Alkoholen (B) sind vergleichsweise gering.
4. Die resultierenden, Hydroxylgruppen aufweisenden Verbindungen zeichnen sich durch einen besonders niedrigen Gehalt an aromatischen Aminen aus und sind für viele Anwendungen, insbesondere zur Herstellung von Formkörpern auf Polyurethanbasis nach dem Prinzip der Reaktionsspritzgußtechnik geeignet, wobei kaum ein Eigenschaftsverlust im Vergleich zu entsprechenden Kunststoffen auf Basis von "Primärpolyolen", d.h. auf Basis von frischen, direkt aus der Polyolproduktion stammenden Verbindungen, beobachtet werden muß.

Bei den Ausgangsmaterialien (A) handelt es sich um Polyurethanharnstoffe oder Polyharnstoffe, in denen das Molverhältnis von Harnstoffgruppen zu Urethangruppen bei 1:20 bis 1:0, vorzugsweise 2:1 bis 1:0 und besonders bevorzugt bei 5:1 bis 1:0, liegt. Besonders bevorzugte Ausgangsmaterialien (A) sind diesen Ausführungen entsprechende, nach der Methode der Reaktionsspritzgußtechnik hergestellte Formkunststoffe des Dichtebereichs 0,8 bis 1,4 g/cm³, vorzugsweise 1,0 bis 1,3 g/cm³. In Betracht kommen insbesondere:
1. Gemäß DE-OS 3 133 859 hergestellte Formkunststoffe, bei deren Herstellung als Ausgangsmaterialien insbesondere (i) flüssige Polyisocyanatgemische auf Basis von 4,4'-Diisocyanatodiphenylmethan und/oder dessen Isomeren und/oder höheren Homologen, (ii) höhermolekulare Polyetherpolyole, vorzugsweise mit primären Hydroxylgruppen und einer Hydroxylfunktionalität von 2 bis 4 des Molekulargewichtsbereichs 2 000 bis 8 000 und (iii) Kettenverlängerergemische bestehend aus niedermolekularen Diolen, insbesondere Ethylenglykol und sterisch gehinderten aromatischen Diaminen, insbesondere 1-Methyl-3,5-diethyl-2,4-diaminobenzol oder dessen technischem Gemisch mit 1-Methyl-3,5-diethyl-2,6-diaminobenzol im Gewichtsverhältnis Diol:Diamin 55:45 bis 95:5 eingesetzt worden sind. In diesen Kunststoffen liegt das Molverhältnis von Harnstoffgruppen zu Urethangruppen deutlich unter 1:1.
2. Formkörper gemäß US-PS 4 218 543, bei deren Herstellung die gleichen Ausgangskomponenten, jedoch im wesentlichen ohne alkoholische Kettenverlängerungsmittel, eingesetzt werden. In diesen Formkunststoffen liegt das Molverhältnis von Harnstoffgruppen zu Urethangruppen deutlich über 2:1, meistens über 5:1.
3. Formkunststoffe auf Polyharnstoffbasis gemäß EP-A-0 081 701 (US-PS 4 774 263). Bei der Herstellung dieser Formkunststoffe werden vor allem (i) Polyisocyanate der oben beispielhaft genannten Art, Aminopolyether mit endständigen primären, aliphatisch oder aromatisch gebundenen Aminogruppen des Molekulargewichtsbereichs 1800 bis 12 000 und aromatische Diamine der oben unter (iii) genannten Art als Kettenverlängerungsmittel eingesetzt. In diesen Formkörpern liegt das Molverhältnis von Harnstoffgruppen zu Urethangruppen praktisch bei 1:0.
4. Formkunststoffe gemäß DE-PS 3 827 595. Bei der Herstellung dieser Formkunststoffe wird ebenfalls nach den Methoden der Reaktionsspritzgußtechnik gearbeitet, wobei als Ausgangsmaterialien NCO-Semiprepolymere aus (i) 4,4'-Diisocyanatodiphenylmethan oder dessen Gemischen mit seinen Isomeren und/oder höheren Homologen und (ii) Polyetherpolyolen der bereits oben unter (ii) genannten Art mit aromatischen Diaminen der bereits oben unter (iii) genannten Art zur Umsetzung gebracht werden. In diesen Kunststoffen liegt das Molverhältnis von Harnstoffgruppen zu Urethangruppen im allgemeinen über 5:1.

Bei der Herstellung der besonders bevorzugt als erfindungsgemäße Ausgangskomponente (A) geeigneten Formkunststoffe können die üblichen Füll- und Verstärkungsstoffe, sowie die üblichen, in den genannten Vorveröffentlichungen beschriebenen Hilfs- und Zusatzmittel mitverwendet werden. Zu den besonders bevorzugten Ausgangsmaterialien (A) gehören insbesondere auch Glasfasern als Füllstoffe enthaltende Formkunststoffe.

Zur Durchführung des erfindungsgemäßen Verfahrens kommen die Ausgangsmaterialien (A) im allgemeinen in granulierter Form zum Einsatz, wobei maximale Teilchendurchmesser von 5 mm bevorzugt sind.

Bei den mehrwertigen Alkoholen (B) handelt es sich um solche des Molekulargewichtsbereichs 62 bis 250, wobei beliebige Gemische derartiger Alkohole eingesetzt werden können. Beispielhaft genannt seien Ethylenglykol, Diethylenglykol, Tri-und Tetraethylenglykol, Propylenglykol, Di-, Tri- und Tetrapropylenglykol, 1,3-Propylenglykol, Di-, Tri- und Tetra-1,3-propylenglykol sowie höherwertige Alkohole wie z.B. Glycerin, Trimethylolpropan, Trimethylolethan und/oder Pentaerythrit. Bevorzugt sind Diethylenglykol und Dipropylenglykol.

Bei den gegebenenfalls mitzuverwendenden Polyhydroxylverbindungen (C) handelt es sich um unter den Bedingungen des erfindungsgemäßen Verfahrens nicht destillierbare Polyhydroxylverbindungen, insbesondere Polyetherpolyole eines über 250 liegenden Molekulargewichts. Besonders bevorzugt handelt es sich um Polyetherpolyole des Molekulargewichtsbereichs 1800 bis 12 000, wie sie gemäß US-PS 4 218 543 als Ausgangsmaterialien verwendet werden.

Zur Durchführung des erfindungsgemäßen Verfahrens kommen die Komponenten (A) und (B) in solchen Mengenverhältnissen zum Einsatz, die einem Gewichtsverhältnis (A):(B) von 3:1 bis 1:10, vorzugsweise 1,5:1 bis 1:5, entsprechen. Die Menge der Komponente (B) wird auf jeden Fall so bemessen, daß ein 100-prozentiger, molarer Überschuß von Hydroxylgruppen der Komponente (B) gegenüber Harnstoff- und Urethangruppen der Komponente (A) vorliegt.

Die gegebenenfalls mitverwendete Komponente (C) wird, falls überhaupt, in Mengen von bis zu 1 000 Gew.-%, vorzugsweise bis zu 200 Gew.-%, bezogen auf das Gewicht der Komponente A) eingesetzt.

Die Alkoholyse findet im allgemeinen innerhalb des Temperaturbereichs von 120 bis 250°C, vorzugsweise 160 bis 220°C, unter Normaldruck statt.

Die zumindest teilweise destillative Entfernung der im Überschuß eingesetzten Komponente (B) findet im allgemeinen bei einem Druck von 1 bis 50 mbar bei Temperaturen von 100 bis 160°C statt.

Die Durchführung des erfindungsgemäßen Verfahrens kann nach verschiedenen Ausführungsformen erfolgen. Allen Ausführungsformen gemeinsam ist, daß im wesentlichen nach der Beendigung der Alkoholysereaktion das im Überschuß eingesetzte niedermolekulare Polyol (B) zumindest teilweise abdestilliert wird, so daß der Destillationsrückstand, ohne Berücksichtigung der gegebenenfalls mitverwendeten Komponente (C), einen Restgehalt an niedermolekularem Alkohol (B) von bis zu 50 Gew.-%, vorzugsweise 0 bis 20 Gew.-% und besonders bevorzugt von 5 bis 15 Gew.-%, aufweist. Im einzelnen sind folgende Ausführungsformen denkbar:
1. Niedermolekulares Polyol (B) und Polyharnstoff- und/oder Polyurethanharnstoffabfälle (A) werden vorgelegt und anschließend auf Reaktionstemperatur aufgeheizt. Nach vollständiger Verflüssigung der Reaktionsmischung wird das niedermolekulare Polyol (B) zumindest teilweise abdestilliert. Vor oder nach der Destillation können dem Reaktionsgemisch je nach gewünschten Eigenschaften höhermolekulare Primärpolyole (C) zugesetzt werden.
2. Das niedermolekulare Polyol (B) wird auf Reaktionstemperatur aufgeheizt und dazu der Polyharnstoff- und/oder Polyurethanharnstoffabfall (A) kontinuierlich oder portionsweise zugegeben. Nach vollständiger Verflüssigung der Reaktionsmischung wird das niedermolekulare Polyol (B) zumindest teilweise abdestilliert Vor oder nach der Destillation können dem Reaktionsgemisch je nach gewünschten Eigenschaften höhermolekulare Primärpolyole (C) zugesetzt werden.
3. Es hat sich als vorteilhaft herausgestellt, die Reaktion kontinuierlich in beheizbaren Schneckenmaschinen (Extrudern) durchzuführen, wobei die Destillation des niedermolekularen Polyols (B) in einer nachgeschalteten Apparatur erfolgt.

Die auf diese Weise erhaltenen Verfahrensprodukte stellen Hydroxylgruppen aufweisende Verbindungen dar, deren Konsistenz bei Raumtemperatur von flüssig-niedrigviskos bis (in Abwesenheit von Polyol (C)) fest reicht. Vorzugsweise handelt es sich um Flüssigkeiten einer Viskosität bei 25°C von 1000 bis 20 000 mPa.s, die sich jedoch von den Verfahrensprodukten gemäß DE-PS 4 024 601 bei vergleichbarer Zusammensetzung der Ausgangsmaterialien durch eine deutlich niedrigere Viskosität auszeichnen. Die Verfahrensprodukte enthalten im übrigen einen sehr geringen Restanteil an sterisch nicht gehindertem, dem eingesetzten Polyisocyanat entsprechendem Diamin von maximal 1,5 Gew.-%, vorzugsweise von maximal 1,1 Gew.-%. Bei Verwendung von unpigmentierten Ausgangsmaterialien (A) weisen die erfindungsgemäßen Verfahrensprodukte in der Regel eine gelb-braune Eigenfarbe auf. Im Falle der Verwendung von Füll- und/oder Verstärkungsstoffen enthaltenden Ausgangsmaterialien (A) liegen diese im allgemeinen in den Verfahrensprodukten in fein dispergierter Form vor.

Die erfindungsgemäßen Verfahrensprodukte können auf einfache Weise durch Variation der Art und Mengenverhältnisse der zum Einsatz gelangenden Ausgangsmaterialien, insbesondere auch durch die Art und Menge der Komponente (C), den jeweils angestrebten Verwendungszwecken angepaßt werden. Sie eignen sich insbesondere als Polyolkomponente bei der Herstellung von Polyurethanharnstoffen nach den Methoden der Reaktionsspritzgußtechnik in Anlehnung an die in den oben zitierten Vorveröffentlichungen beschriebenen Verfahrensweisen.

In den nachfolgenden Beispielen beziehen sich alle Prozentangaben auf das Gewicht.

### Beispiele

### Ausgangsmaterialien

### Polyurethanharnstoff A1:

Es handelt sich um ein Granulat einer maximalen Korngröße von 3 mm aus Glasfaser-verstärktem Polyurethanharnstoff der Dichte 1,26 g/cm³, hergestellt in Analogie zu Beispiel 3 der DE-PS 2 622 951.

Das Molverhältnis Harnstoff:Urethan liegt bei 2.3:1.

### Polyetherpolyol CI:

Polyetherpolyol der OH-Zahl 36, hergestellt durch Propoxylierung von Trimethylolpropan und anschließende Ethoxylierung des Propoxylierungsprodukts (PO:EO-Gewichtsverhältnis =83:17).

### Polyetherpolyol CII:

Polyetherpolyol der OH-Zahl 28, hergestellt durch Propoxylierung von Trimethylolpropan und anschließende Ethoxylierung des Propoxylierungsprodukts (PO:EO-Gewichtsverhältnis =83:17).

### Beispiel 1

In einem mit Rührer und Heizmantel ausgestatteten 3,6 l Planschlifftopf werden 500 g Diethylenglykol (DEG) bei 200°C vorgelegt. 500 g des granulierten Polyurethanharnstoffs A1) (max. Korngröße ca. 3 mm) werden in 5 Portionen innerhalb 40 min zugegeben. Es wird weitere 10 min bei 200°C gehalten. Danach ist ein homogenes Reaktionsgemisch entstanden. 400 g Diethylenglykol werden bei einem Druck von 5 mbar und einer Temperatur von 130 bis 140°C abdestilliert. Man erhält eine bei Raumtemperatur erstarrende Masse, die bei 80°C aufschmelzbar und mit höhermolekularen Primärpolyolen C) mischbar ist.
OH-Zahl: 175 mg KOH/g
NH₂-Gruppen: 0,58 %
Gehalt an freiem Diethylenglykol: 7,3 %
Gehalt an freiem, sterisch ungehindertem Polyamin: 0,7 %.

### Beispiel 2

In einem mit Rührer und Heizmantel ausgestatteten 3,6 l-Planschlifftopf werden 500 g DEG und 500 g des granulierten Ausgangsmaterials A1) bei Raumtemperatur gemischt und auf 200°C aufgeheizt. Nach 30 min bei 200°C ist ein homogenes Reaktionsprodukt entstanden. Nach Abdestillation von 400 g DEG wird ein homogenes pastiges Reaktionsprodukt erhalten, das bei 80°C gut mit höhermolekularen Polyolen (C) mischbar ist.
OH-Zahl: 170 mg KOH/g
NH₂-Gruppen: 0,73 %
Gehalt an freiem Diethylenglykol: 6,8 %
Gehalt an sterisch nicht gehindertem Polyamin: 0,9 %.

### Beispiel 3

In einem mit Rührer und Heizmantel ausgestatteten 3,6 l-Planschlifftopf werden 500 g DEG und 500 g des granulierten Ausgangsmaterials A1) bei Raumtemperatur gemischt und auf 200°C aufgeheizt. Nach 30 min bei 200°C ist ein homogenes Reaktionsprodukt entstanden. Es wird auf 150°C abgekühlt und 500 g Polyetherpolyol C1) zugegeben. Nach Abdestillation von 400 g DEG erhält man ein homogenes Produkt mit einer OH-Zahl =117 mg KOH/g, einem Gehalt an NH₂-Gruppen von = 1,07 %, einem Gehalt an freiem Diethylenglykol von 4,5 % und an sterisch ungehindertem Polyamin von 0,5 %. Die Viskosität des Produkts liegt bei 2 300 mPa.s (25°C).

### Beispiel 4

In einem mit Rührer und Heizmantel ausgestatteten 3,6 l-Planschlifftopf werden 500 g Dipropylenglykol (DPG) und 500 g des granulierten Ausgangsmaterials A1) bei Raumtemperatur gemischt und auf 200°C aufgeheizt. Nach 3 h bei 200°C ist ein homogenes Reaktionsprodukt entstanden. Nach Abkühlen auf 150°C werden 500 g des Polyetherpolyols C2) zugegeben und anschließend 400 g DPG abdestilliert. Man erhält ein homogenes Produkt mit einer OH-Zahl von 166 mg KOH/g, einer Viskosität von 5 000 mPa.s bei 25°C, einem Gehalt an primären Aminogruppen von 1,09 %, an freiem DPG von 5,2 % und an freiem, sterisch ungehindertem Diamin von 0,9 %.

## Patentansprüche

1. Verfahren zur Herstellung von alkoholische Hydroxylgruppen aufweisenden, als Ausgangsmaterial für das Isocyanat-Polyadditionsverfahren geeigneten Verbindungen durch Alkoholyse von Polyisocyanat-Polyadditionsprodukten bei erhöhten Temperaturen unter anschließender destillativer Aufarbeitung des Alkoholyseprodukts, dadurch gekennzeichnet, daß man
A) Polyurethanharnstoff- oder Polyharnstoffabfälle, in denen das Molverhältnis von Harnstoffgruppen zu Urethangruppen bei 1:20 bis 1:0 liegt, in zerkleinerter Form in Abmischung mit
B) mehrwertigen Alkoholen des Molekulargewichtsbereichs 62 bis 250 unter Einhaltung eines Gewichtsverhältnisses (A):(B) von 3:1 bis 1:10 auf 120 bis 250 °C unter Bildung eines homogenen flüssigen Reaktionsgemisches erhitzt, wobei die Menge der Komponente (B) so bemessen wird, daß ein 100-prozentiger, molarer Überschuß von Hydroxylgruppen der Komponente (B) gegenüber Harnstoff- und Urethangruppen der Komponente (A) vorliegt, und anschließend unter vermindertem Druck mindestens 10 % des eingesetzten mehrwertigen Alkohols (B) destillativ entfernt, so daß der Destillationsrückstand ohne Berücksichtigung der gegebenenfalls zugesetzten Komponente (C) einen Restgehalt von freiem mehrwertigem Alkohol (B) von maximal 50 Gew.-% aufweist, wobei dem Gemisch gegebenenfalls vor und/oder nach der destillativen Entfernung des überschüssigen Alkohols (B)
C) insgesamt bis zu 1 000 Gew.-%, bezogen auf das Gewicht der Ausgangskomponente A), mindestens einer, unter den Destillationsbedingungen nicht flüchtigen Polyhydroxylverbindung eines über 250 liegenden Molekulargewichts zugemischt werden.

2. Verfahren gemäß Anspruch 1, dadurch gekennzeichnet, daß man als Ausgangsmaterialien A) gegebenenfalls Füll- und/oder Verstärkungsstoffe enthaltende Kunststoffe auf Polyurethanharnstoff- oder Polyharnstoff-Basis des Dichtebereichs 0,8 bis 1,4 g/cm³, die in an sich bekannter Weise nach der Methode der Reaktionsspritzgußtechnik hergestellt worden sind, und für welche das Molverhältnis von Harnstoffgruppen zu Urethangruppen bei 2:1 bis 1:0 liegt, verwendet.

3. Verfahren gemäß Anspruch 1 und 2, dadurch gekennzeichnet, daß man die Komponente B) in einer solchen Menge einsetzt, daß das Gewichtsverhältnis (A):(B) bei 1,5:1 bis 1:5 liegt.

4. Verfahren gemäß Anspruch 1 bis 3, dadurch gekennzeichnet, daß man den überschüssigen mehrwertigen Alkohol (B) bis auf einen Restgehalt des Destillationsrückstandes, ohne Berücksichtigung der gegebenenfalls nach erfolgter Alkoholyse zugesetzten Komponente (C), an mehrwertigem Alkohol (B) von 0 bis 20 Gew.-% entfernt.

5. Verfahren gemäß Anspruch 1 bis 4, dadurch gekennzeichnet, daß man die Komponente C) in einer Menge von bis zu 200 Gew.-%, bezogen auf das Gewicht der Ausgangskomponente A, verwendet.

## Claims

1. Process for the production of compounds containing alcoholic hydroxyl groups suitable as starting material for the isocyanate polyaddition process by the alcoholysis of polyisocyanate polyaddition products at elevated temperatures with subsequent distillative working up of the alcoholysis product, characterised in that
A) polyurethaneurea or polyurea waste, in which the molar ratio of urea groups to urethane groups is 1:20 to 1:0, is heated to temperatures of 120 to 250°C in comminuted form mixed with
B) polyhydric alcohols of the molecular weight range of 62 to 250 while maintaining a weight ratio of (A):(B) of 3:1 to 1:10 to form a homogeneous liquid reaction mixture, wherein the quantity of component (B) is calculated such that there is a 100% molar excess of hydroxyl groups of component (B) relative to urea and urethane groups of component (A), followed by distillative removal under reduced pressure of at least 10% of the introduced polyhydric alcohol (B), such that, without taking account of any optionally added component (C), the distillation residue has a residual content of free polyhydric alcohol (B) of at most 50 wt.%, wherein
C) a total of up to 1,000 wt.%, relative to the weight of starting component A), of at least one polyhydroxyl compound of a molecular weight of above 250 which is non-volatile under the distillation conditions, is optionally added to the mixture before and/or after distillative removal of the excess alcohol (B).

2. Process according to claim 1, characterised in that plastics based on polyurethaneurea or polyurea in the density range from 0.8 to 1.4 g/cm³, optionally containing fillers and/or reinforcing materials, and produced in a manner known *per se* using reaction injection moulding techniques and having a molar ratio of urea groups to urethane groups of 2:1 to 1:0 are used as starting materials A).

3. Process according to claims 1 and 2, characterised in that component B) is used in a quantity such that the weight ratio of (A):(B) is 1.5:1 to 1:5.

4. Process according to claims 1 to 3, characterised in that the excess polyhydric alcohol (B) is removed down to a residual content of polyhydric alcohol (B) in the distillation residue of 0 to 20 wt.%, without taking account of any component (C) optionally added on completion of alcoholysis.

5. Process according to claims 1 to 4, characterised in that component C) is used in a quantity of up to 200 wt.%, relative to the weight of starting component A.

## Revendications

1. Procédé de préparation de composés présentant des groupes hydroxyles alcooliques, appropriés comme matériau de départ pour le procédé de polyaddition d'isocyanates, par alcoolyse de produits de polyaddition de polyisocyanates à des températures élevées et avec retraitement ultérieur par distillation du produit d'alcoolyse, caractérisé en ce que
A) on chauffe des déchets de polyuréthane-urées ou de polyurées, dans lesquels la proportion molaire des groupes urées aux groupes uréthanes est de 1 : 20 à 1 : 0, sous forme broyée en mélange avec
B) des polyalcools dans l'intervalle de poids moléculaires de 62 à 250 en maintenant une proportion pondérale (A):(B) de 3 : 1 à 1 : 10 entre 120 et 250°C en formant un mélange réactionnel liquide homogène, étant entendu que la quantité du composant (B) est déterminée de sorte qu'il existe un excès molaire de 100 % de groupes hydroxyles du composant (B) par rapport aux groupes urées et uréthanes du composant (A), et ensuite on élimine par distillation sous pression réduite au moins 10 % du polyol utilisé (B), de sorte que le reste de distillation présente, sans tenir compte du composant (C) ajouté le cas échéant, une teneur résiduelle en polyalcool libre (B) qui est au maximum de 50 % en poids, étant entendu qu'on ajoute au mélange le cas échéant avant et/ou après l'élimination par distillation de l'alcool en excès (B)
C) au total jusqu'à 1 000 % en poids, rapporté au poids du composant de départ A), d'au moins un composé polyhydroxylé non volatil dans les conditions de distillation, ayant un poids moléculaire dépassant 250.

2. Procédé selon la revendication 1, caractérisé en ce qu'on utilise comme matériaux de départ A) des matières plastiques contenant le cas échéant des charges et/ou des produits de renfort, à base de polyuréthane-urées ou de polyurées dans le domaine de masses volumiques de 0,8 à 1,4 g/cm³, qu'on a préparées d'une manière connue en soi selon le procédé de la technique de moulage réactif par injection et pour lesquelles la proportion molaire des groupes urées aux groupes uréthanes est de 2 : 1 à 1 : 0.

3. Procédé selon les revendications 1 et 2, caractérisé en ce qu'on utilise le composant B) en des quantités telles que la proportion pondérale (A):(B) est de 1,5 : 1 à 1 : 5.

4. Procédé selon les revendications 1 à 3, caractérisé en ce qu'on élimine le polyol en excès (B) jusqu'à une teneur résiduelle du reste de distillation, sans tenir compte du composant (C) ajouté le cas échéant après alcoolyse, en polyol (B) de 0 à 20 % en poids.

5. Procédé selon les revendications 1 à 4, caractérisé en ce qu'on utilise le composant C) en une quantité pouvant atteindre 200 % en poids par rapport au poids du composant de départ A.
